# EUROPEAN PATENT SPECIFICATION

(11) **EP 3 984 421 B1**
(45) Date of publication and mention of the grant of the patent: **09.08.2023**
(21) Application number: 20202460.0
(22) Date of filing: 19.10.2020
(51) Int. Cl.: A47J 31/44

(54) **COFFEE MACHINE WITH ELECTROMAGNETIC SUSPENSION SYSTEM**
KAFFEEMASCHINE MIT ELEKTROMAGNETISCHEM AUFHÄNGESYSTEM
MACHINE À CAFÉ DOTÉE D'UN SYSTÈME DE SUSPENSION ÉLECTROMAGNÉTIQUE

(43) Date of publication of application: 20.04.2022
(73) Proprietor: BSH Hausgeräte GmbH, 81739 München (DE)
(72) Inventor: Studencnik, Simon, 2390 Ravne na Koroskem (SI)

(56) References cited:
- GB-A- 2 448 009
- US-A1- 2018 175 750
- US-B1- 9 245 679

## Description

The present invention relates to a coffee machine with an electromagnetic suspension system comprising an induction coil integrated into a body of the coffee machine and powered with an electric current by a power source and the coffee machine is provided with a cup having a ferromagnetic core.

The electromagnetic suspension systems are known from the state of the art. The systems use the physical phenomenon of magnetic levitation. In this phenomenon the object is suspended in the air with no physical support but only by the magnetic field which is generated by a magnet or electromagnet. The suspended object has to be made of magnetic material. The electric field may be also generated by an induction coil. The induction coil is a passive electronic element made of a coil of a wire wrapped around a core. The core can be made of ferrous material which increase the magnetic field induced by the flow of the current up to several hundred times.

Along with the development of the magnetic levitation technology, currently more and more magnetic levitation products have arisen, e.g., magnetic levitation sound equipment, magnetic levitation toys or magnetic levitation decorations. The magnetic levitation technology is also widely used in transport, mechanics but also in the everyday appliances e.g. coffee machines.

The US 9 245 679 B1 patent discloses the magnetic levitation assembly which includes at least one electromagnet that is coupled to a support surface. A top coupler is positionable around a top of a beverage container. The top coupler is attracted to the at least one electromagnet. A bottom coupler is positionable on a bottom of the beverage container. The bottom coupler is repelled to the at least one electromagnet. The beverage container is levitated by magnetism via attraction to an electromagnet positioned above or repelled to an electromagnet positioned below a respective coupler.

The US 2006/ 044 094 A1 patent application discloses a magnetic levitation apparatus which supports a magnetic element in a magnetic field. A control system controls a variable magnetic field to maintain the magnetic element at an embodiments the variable magnetic field has a gradient in the direction of the unstable axis but no field component. In some embodiments the magnetic field is provided by an array of four discrete magnets. In some embodiments additional magnets provide increased field intensity at the equilibrium location this increases stability of the levitated magnetic element against overturning. Light and electrical power may be supplied to the levitating magnetic element.

The patent document GB 2 448 009 A discloses a liquid heating appliance which comprises a lower liquid vessel, an upper liquid vessel that is mountable on the lower vessel and a radiant heater for heating at least the lower vessel. The radiant heater may be at the side, top or bottom of the lower vessel or there may be a respective heater in each vessel. The heater, such as a halogen heater, may direct visible light into the upper vessel. Alternatively, there may be inductive heating coils. A top heater may be located on a lid of the lower vessel so that the lid conducts heat to the upper vessel. There may be plural heaters at different heights. The vessels may be arranged so that that warm air or steam 5 from the lower vessel is retained in contact with a sidewall of the upper vessel. The lower vessel may include a handle engageable with the upper vessel so as to retain the upper and lower vessels together. The lower vessel may include an electromagnet which exerts an upward force on the removable upper vessel. Additionally, a liquid heating appliance may be controlled in response to detected agitation of the liquid.

It is the object of the present invention to provide a further development with an advantage over the state of the art and provide a coffee machine with an electromagnetic suspension system which ensures a cup stable levitation.

This object is solved by a coffee machine with an electromagnetic suspension system and a cup having a ferromagnetic core whereby the cup is provided with an additional ferromagnetic core and the coffee machine is provided with a stabilization coil for the cup stabilization, wherein the stabilization coil surrounds the cup.

The electromagnetic suspension system comprises an induction coil. The induction coil is made of an electric wire which is wrapped around a core. The induction coil is integrated into the coffee machine base. The induction coil is powered with an electric current by reduced net voltage. The electric current generated by the power source flows through the induction coil and generates a magnetic field around the wire. If the current changes, the magnetic flux which is present around the coil also changes and causes a voltage induction on the wire.

The cup which is placed at the coffee machine base and in which the beverage is collected is equipped with a ferromagnetic core placed at the bottom edge of the cup. The ferromagnetic core is a ring shape or disc shape element which is integrated into the cup. The cup itself can be made from standard material like plastic, ceramics etc. The cup is also equipped with an additional ferromagnetic core. The additional ferromagnetic core is a ring shape element made of ferromagnetic material and is placed at the top edge of the cup. The additional ferromagnetic core is provided to stabilize the cup above the base. The stabilization coil is placed in an upper part of the coffee machine and surrounds the cup. The cup has the tendency to tip over so the stabilization coil prevents the cup against tipping over. The positive effect that the preparing a hot beverage is made in safe and stable manner. The stabilization coil prevents the cup against tipping over which would cause spilling the beverage out. In case of hot beverage like coffee the risk of hurt of the user is great in case of tipping over of the cup and the stabilization coil greatly reduces this risk. The other positive effect is that the visual appearance of the whole appliance with floating cup is much more appealing in comparison to the appliance with cup without such stabilization.

In a preferred embodiment of the invention the ferromagnetic core is placed at a bottom edge of the cup and the additional ferromagnetic core is placed at the top edge of the cup. The ferromagnetic core is essential for creating a magnetic force which suspends the cup in the air. The additional ferromagnetic core is provided for the cup stabilization and cooperates with the stabilization coil of the coffee machine.

In the preferred embodiment of the invention a remanence of the induction coil is regulated automatically by a potentiometer based on a data received from a flowmeter. The potentiometer is able to receive data about already filed quantity of the beverage from the flowmeter and correspondingly adjust the voltage in the induction spool to maintain, increase or decrease it to define desired cup position. The flowmeter measures the liquid quantity and the measured data are sent to the potentiometer in order to adjust the electric current of proper value.

In the preferred embodiment of the invention the current in the induction coil is adjusted to the beverage quantity in the cup. During filling up the cup with the beverage the cup changes its position depending on the beverage quantity. The position of the cup in relation to the coffee machine base indicate beverage creating process progress. The positive effect is that the information of the process progress is given to the customer not only from the coffee machine display but also from the cup position.

The present invention provides a coffee machine with an electromagnetic system for a cup suspension. The electromagnetic suspension of the cup is a feature which attracts the consumer and creates a positive impression of the appliance.

The construction of the invention, however, together with additional objects and corresponding advantages will be best understood form the following description of specific embodiments and in connection with the accompanying drawing.

In the drawing:
- Fig. 1: shows a coffee machine in isometric view
- Fig. 2: shows the coffee machine front part with the cup and the schematic view of the electromagnetic suspension system

In cooperation with attached drawing, the technical contents and detailed description of the present invention are described thereinafter according to a preferable embodiment. being not used to limit its executing scope. Any equivalent variation and modification made according to appended claims is all covered by the claims claimed by the present invention.

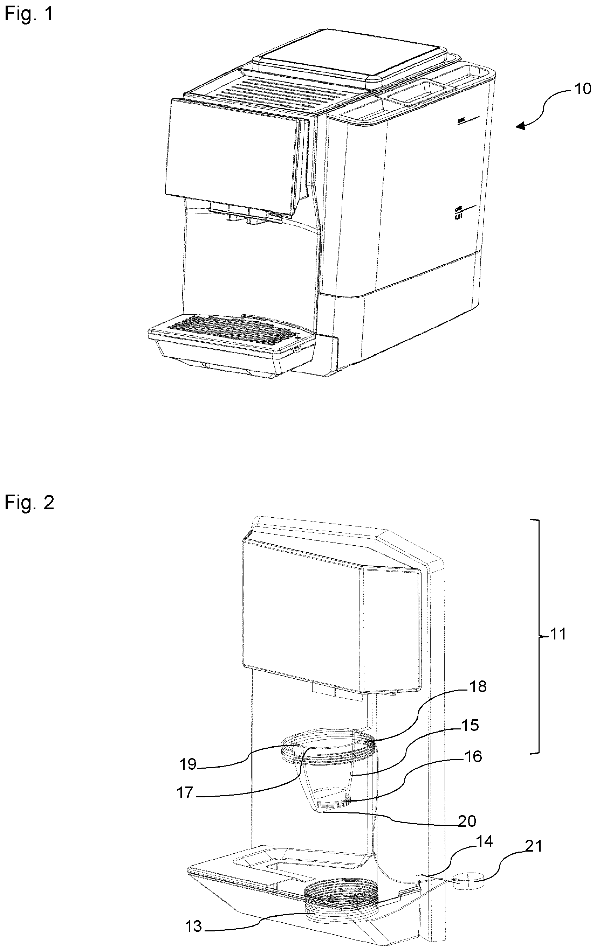

Fig. 1 shows a coffee machine 10 in isometric view. The coffee machine 10 is a standard appliance with typical elements like water tank, a body of the coffee machine 10, a coffee spout or a drip tray.

Fig. 2 shows a front part of the coffee machine 10 with the schematic view of the electromagnetic suspension system and the cup 15. The coffee machine 10 is provided with an induction coil 13 which is placed at the bottom of the coffee machine 10 body e.g. in the drip tray. The induction coil 13 is integrally mounted inside the body of the coffee machine 10. The induction coil 13 is powered by an electric current which is generated by the power source 14. The electric current is adjusted by the potentiometer 21 based on the data provided by the flowmeter (not shown on the figure). The cup 15 is an essential element of the electromagnetic suspension system. The cup 15 is provided with a ferromagnetic core 16 placed at the bottom edge 20 of the cup 15. The ferromagnetic core 16 is an integral part of the cup 15. The cup 15 is provided also with an additional ferromagnetic core 17 which is placed at the top edge 19 of the cup 15. The electric current which goes through the induction coil 13 generates the magnetic force which repels the cup 15 from the base of the coffee machine 10 in order to suspend the cup 15 above the base. The cup 15 is stabilized by an additional stabilization coil 18 which is placed in the upper part 11 of the coffee machine 10.

### LIST OF REFERENCE SIGNS

- 10: coffee machine
- 11: upper part
- 13: induction coil
- 14: power source
- 15: cup
- 16: ferromagnetic core
- 17: additional ferromagnetic core
- 18: stabilization coil
- 19: top edge
- 20: bottom edge
- 21: potentiometer

## Claims

1. A coffee machine (10) having:
- an electromagnetic suspension system comprising an induction coil (13) integrated into a body of the coffee machine (10) and powered with an electric current by a power source (14) and
- a cup (15) provided with a ferromagnetic core (16), wherein the cup (15) is provided with an additional ferromagnetic core (17) and in that the coffee machine (10) is provided with a stabilization coil (18) for the cup (15) stabilization
**characterized in that** the stabilization coil (18) surrounds the cup (15).

2. The coffee machine (10) according to claim 1, **characterized in that** the stabilization coil (18) is placed in an upper part (11) of the coffee machine (10).

3. The coffee machine (10) according to any of the preceding claims, **characterized in that** the ferromagnetic core (16) is placed at a bottom edge (20) of the cup (15).

4. The coffee machine (10) according to any of the preceding claims, **characterized in that** the additional ferromagnetic core (17) is placed at the top edge (19) of the cup (15).

5. The coffee machine (10) according to any of the preceding claims, **characterized in that** a remanence of the induction coil (13) is regulated automatically by a potentiometer (21) based on a data received from a flowmeter.

6. The coffee machine (10) according to any of the preceding claims, **characterized in that** the current in the induction coil (13) is adjusted to the beverage quantity in the cup (15).

## Patentansprüche

1. Kaffeemaschine (10) mit Folgendem:
- einem elektromagnetischen Aufhängesystem, das eine Induktionsspule (13) umfasst, die in einen Hauptteil der Kaffeemaschine (10) integriert ist und von einer Stromquelle (14) mit elektrischem Strom versorgt wird, und
- einem Becher (15), der mit einem ferromagnetischen Kern (16) versehen ist, wobei der Becher (15) mit einem zusätzlichen ferromagnetischen Kern (17) und die Kaffeemaschine (10) mit einer Stabilisierungsspule (18) für die Stabilisierung des Bechers (15) versehen ist,
**dadurch gekennzeichnet, dass** die Stabilisierungsspule (18) den Becher (15) umgibt.

2. Kaffeemaschine (10) nach Anspruch 1, **dadurch gekennzeichnet, dass** die Stabilisierungsspule (18) in einem oberen Teil (11) der Kaffeemaschine (10) angeordnet ist.

3. Kaffeemaschine (10) nach einem der vorhergehenden Ansprüche, **dadurch gekennzeichnet, dass** der ferromagnetische Kern (16) an einem unteren Rand (20) des Bechers (15) angeordnet ist.

4. Kaffeemaschine (10) nach einem der vorhergehenden Ansprüche, **dadurch gekennzeichnet, dass** der zusätzliche ferromagnetische Kern (17) am oberen Rand (19) des Bechers (15) angeordnet ist.

5. Kaffeemaschine (10) nach einem der vorhergehenden Ansprüche, **dadurch gekennzeichnet, dass** eine Restmagnetisierung der Induktionsspule (13) auf der Grundlage von aus einem Durchflussmesser empfangenen Daten über ein Potentiometer (21) automatisch reguliert wird.

6. Kaffeemaschine (10) nach einem der vorhergehenden Ansprüche, **dadurch gekennzeichnet, dass** der Strom in der Induktionsspule (13) an die Getränkemenge im Becher (15) angepasst wird.

## Revendications

1. Machine à café (10) ayant :
- un système de suspension électromagnétique comprenant une bobine d'induction (13) intégrée à un corps de la machine à café (10) et alimentée en un courant électrique par une source d'énergie (14) et
- une tasse (15) dotée d'une âme ferromagnétique (16), dans laquelle la tasse (15) est dotée d'une âme ferromagnétique supplémentaire (17) et en ce que la machine à café (10) est dotée d'une bobine de stabilisation (18) pour la stabilisation de la tasse (15), **caractérisée en ce que** la bobine de stabilisation (18) entoure la tasse (15).

2. Machine à café (10) selon la revendication 1, **caractérisée en ce que** la bobine de stabilisation (18) est positionnée dans une partie supérieure (11) de la machine à café (10).

3. Machine à café (10) selon l'une quelconque des revendications précédentes, **caractérisée en ce que** l'âme ferromagnétique (16) est positionnée sur un bord inférieur (20) de la tasse (15).

4. Machine à café (10) selon l'une quelconque des revendications précédentes, **caractérisée en ce que** l'âme ferromagnétique supplémentaire (17) est positionnée sur le bord supérieur (19) de la tasse (15).

5. Machine à café (10) selon l'une quelconque des revendications précédentes, **caractérisée en ce qu'**une rémanence de la bobine d'induction (13) est régulée automatiquement par un potentiomètre (21), sur la base d'une donnée reçue d'un débitmètre.

6. Machine à café (10) selon l'une quelconque des revendications précédentes, **caractérisée en ce que** le courant dans la bobine d'induction (13) est adapté à la quantité de boisson dans la tasse (15).
